# EUROPÄISCHE PATENTANMELDUNG

(11) **EP 1 351 437 A1**
(43) Veröffentlichungstag der Anmeldung: **08.10.2003**
(21) Anmeldenummer: 02007173.4
(22) Anmeldetag: 28.03.2002
(51) Int. Cl.: H04L 12/18, H04L 12/56

(54) **Reservierung von Funk-Übertragungskapazitäten durch gleichzeitige Übertragung von Reservierungs-Antworten auf eine Reservierungs-Anfrage**

(71) Anmelder: SIEMENS AKTIENGESELLSCHAFT, 80333 München (DE)
(72) Erfinder: Lott, Matthias, 81477 München (DE); Schulz, Egon, Dr., 80993 München (DE)

(57) **Zusammenfassung**

Beschrieben wird eine Möglichkeit zur Reservierung von Funk-Übertragungskapazitäten für eine Datenübertragung von einer Sendeeinrichtung an mehrere Empfangseinrichtungen. Es wird dabei eine Reservierungs-Anfrage gleichzeitig an mehrere Empfangseinrichtungen übertragen und die Empfangseinrichtungen greifen für die gleichzeitige Übertragung jeweils einer Reservierungs-Antwort im Rahmen der Funkverbindung auf gemeinsame Übertragungskapazitäten zu.

## Beschreibung

Die vorliegende Erfindung betrifft ein Verfahren zur Reservierung von Funk-Übertragungskapazitäten für eine Datenübertragung von einer Sendeeinrichtung an mehrere Empfangseinrichtungen, wobei die Datenübertragung zwischen der Sendeeinrichtung und den Empfangseinrichtungen zumindest teilweise über eine Funkverbindung erfolgt, wobei von der Sendeeinrichtung eine Reservierungs-Anfrage an mindestens eine Empfangseinrichtung übertragen wird, daraufhin eine Reservierungs-Antwort an die Sendeeinrichtung übertragen wird, und aufgrund der Reservierungs-Antwort eine Reservierung von Übertragungskapazitäten erfolgt. Weiterhin betrifft die Erfindung ein Funk-Kommunikationssystem, mit mindestens einer Sendeeinrichtung, aufweisend eine Einrichtung zur Übertragung von Reservierungs-Anfragen für eine Datenübertragung an mindestens eine Empfangseinrichtung, mehreren Empfangseinrichtungen, aufweisend eine Einrichtung zur Übertragung von Reservierungs-Antworten an Sendeeinrichtungen über eine Funkverbindung und Einrichtungen zur Reservierung von Übertragungskapazitäten.

Die Begriffe Sendeeinrichtung und Empfangseinrichtung sollen im Rahmen der vorliegenden Erfindung nicht derart restriktiv verstanden werden, dass die entsprechenden Einrichtungen im Sinne einer Einweg-Kommunikation lediglich zum Senden bzw. lediglich zum Empfang von Daten ausgebildet sind. Vielmehr sind beide Arten von Einrichtungen grundsätzlich mit Sendefunktionen und Empfangsfunktionen versehen, wobei jedoch für die vorgesehene Datenübertragung, für die die Reservierung der Funk-Übertragungskapazitäten erfolgen soll, eine der Einrichtungen als Sendeeinrichtung agiert und mehrere andere Einrichtungen als Empfangseinrichtungen dienen. Eine Datenübertragung kann insbesondere im Rahmen von Verteildiensten (so genannte Broadcast oder Multicast bzw. Point-to-Multipoint) erfolgen, also der Übertragung identischer Daten an mehrere Empfangseinrichtungen.

Ein grundlegendes Problem bei einer Übertragung von identischen Daten an mehrere Empfangseinrichtungen - auch bezeichnet als Verteildienste wie Broadcast oder Multicast - ist die Garantie der Fehlerfreiheit der Datenübertragung. Insbesondere in Funk-Kommunikationssystemen oder Kommunikationssystemen, in denen zumindest teilweise eine Funkübertragung erfolgt, besteht die Gefahr, dass durch eine gegenseitige negative Beeinflussung der Sendeeinrichtungen und/oder der Empfangseinrichtungen nicht alle Empfangseinrichtungen die gewünschten Daten erhalten. Bei solchen Systemen kann nur unter erheblichem Aufwand garantiert werden, dass alle Empfangseinrichtungen die zu übertragenden Daten fehlerfrei erhalten werden.

Insbesondere bei zukünftigen Multimedia-Diensten, die auf den vorgenannten Methoden basieren können und die in der Regel gleichzeitig von mehreren Empfangseinrichtungen genutzt werden, kann ein Datenverlust sehr kritisch sein. Daher besteht die Notwendigkeit für geeignete Maßnahmen, die garantieren, dass die zu übertragenden Daten sicher und fehlerfrei bei allen Empfangseinrichtungen ankommen, wobei diese Maßnahmen immer dann Anwendung finden sollen, wenn die Daten zumindest teilweise über eine Funkverbindung übertragen werden, die eine fehlerbehaftete Datenübertragung verursachen kann.

Ein Fall einer gegenseitigen negativen Beeinflussung von Sendeeinrichtungen und/oder Empfangseinrichtungen ist das Auftreten von versteckten Stationen. Versteckte Stationen sind Sendeeinrichtungen bzw. gewisse Daten sendende Empfangseinrichtungen, die sich außerhalb der Detektionsreichweite einer Sendeeinrichtung, aber innerhalb der Interferenzreichweite einer Empfangseinrichtung befinden. Eine gleichzeitige Datenübertragung der Sendeeinrichtung und der versteckten Station kann dann bei der Empfangseinrichtung zu einer Kollision der übertragenen Daten führen. Versteckte Stationen können also den Durchsatz an Daten in einem Funk-Kommunikationssystem drastisch verringern, es werden kostbare Übertragungskapazitäten in einem Funk-Kommunikationssystem nur unzureichend genutzt.

Versteckte Stationen treten vor allem dann in Funk- Kommunikationssystemen auf, wenn keine detaillierte Planung für das Funk-Kommunikationssystem möglich ist. Ein typisches Beispiel dafür sind selbstorganisierende Netze, bzw. Ad-hoc-Netze. Ebenso können versteckte Stationen in nicht geplanten Funk-Kommunikationssystemen auftreten, ohne dass es sich dabei um Ad-hoc-Netze handelt. Funk-Kommunikationssysteme erfordern meist bestimmte Zugangspunkte (Access Points). Versteckte Stationen können nun auftreten, wenn verschiedene Zugangspunkte unsynchronisiert operieren, nicht voneinander wissen oder von unterschiedlichen Betreibern oder Besitzern genutzt werden.

Um versteckte Stationen zu verhindern, wird z.B. in dem Standard IEEE 802.11 für den dezentralen Modus (Distributed Coordination Function, DCF) ein so genanntes Handshaking-Verfahren zwischen zwei Stationen (Unicast) für eine Reservierung von Übertragungskapazitäten vorgeschlagen. Hierzu wird beispielhaft auf C. H. Foh, M. Zukerman, "Performance Evaluation of 802.11", Proc. VTC'01 Spring, Rhodes, 2001 verwiesen. Dabei wird zuerst eine Reservierungs-Anfrage (Request-to-Send RTS) von einer Sendeeinrichtung zu einer Empfangseinrichtung übertragen, worauf die Empfangseinrichtung mit einer Reservierungs-Antwort (Clear-to-Send CTS) antwortet. Falls die Sendeeinrichtung nach der Übertragung des RTS-Signals von der Empfangseinrichtung keine Reservierungs-Antwort erhält oder ein fremdes CTS-Signal einer anderen Empfangseinrichtung empfängt, erfolgt keine Reservierung von Übertragungskapazitäten. Die Sendeeinrichtung unterbindet in diesem Fall die an sich vorgesehene Datenübertragung. Falls die Empfangseinrichtung zuvor ein fremdes RTS-Signal empfangen oder das RTS-Signal nicht korrekt empfangen konnte, sendet sie kein CTS zurück, um eine aktive Übertragung nicht zu stören.

Dieses Verfahren kann jedoch nach dem Stand der Technik nur für Übertragungen zwischen einer Sendeeinrichtung und einer einzigen Empfangseinrichtung (Unicast-Übertragungen) eingesetzt werden, da nach diesem Stand der Technik bei dem Einsatz für eine Punkt-zu-Mehrpunktübertragung (Point-to-Multipoint) die CTS-Signale von mehreren antwortenden, potentiellen Empfangseinrichtung bei der potentiellen Sendeeinrichtung bei gleichzeitiger Übertragung kollidieren könnten. Es müssten also die potentiellen Empfangseinrichtung die CTS-Signale nacheinander aussenden. Dabei würde das RTS/CTS-Verfahren aber nicht nur unverhältnismäßigen Protokollzusatz (Overhead) erzeugen sondern auch noch das Problem aufwerfen, dass abgesehen von einer Empfangseinrichtung alle anderen Empfangseinrichtungen erst nach einer weiteren Verweildauer (bis die anderen Empfangseinrichtungen ihr CTS-Signal gesendet haben) ihr eigenes CTS-Signal aussenden könnten. Damit würden Empfangseinrichtungen in der Umgebung einer wartenden Empfangseinrichtung jedoch implizit annehmen, dass diese Empfangseinrichtung kein CTS-Signal mehr senden wird. Das Prinzip des RTS/CTS-Verfahrens würden verletzt werden und nicht mehr funktionieren.

Aus dem Stand der Technik ist es grundsätzlich bekannt, für Datenübertragungen zwischen Sendeeinrichtungen und Empfangseinrichtungen, die im Anschluss an eine erfolgreich durchgeführte Reservierung von Übertragungskapazitäten erfolgen, Sendeeinrichtungen oder Empfangseinrichtungen einen gleichzeitigen Zugriff auf gemeinsame Übertragungskapazitäten zu ermöglichen. Hierzu wird beispielsweise auf A. Doufexi et al., "A Study of Performance of HIPERLAN/2 and IEEE 802.11a Physical Lavers", Proc. VTC'01 Spring, Rhodes, 2001 verwiesen. M. Lott et al., "Point-To-Multipoint ARQ Protocol with Efficient Acknowledgement Transmission", Proc. VTC'01 Spring, Rhodes, 2001 beschreibt insbesondere die Möglichkeit, nach einer erfolgten Point-to-Multipoint-Übertragung von Daten gleichzeitig mehrere positive oder negative Bestätigungsnachrichten seitens mehrerer Empfänger unter Zugriff auf gemeinsame Übertragungskapazitäten, insbesondere auf ein gemeinsames OFDM-Symbol, zu übertragen. Über Möglichkeiten zu einer vorausgehenden effektiven Reservierung von Übertragungskapazitäten, speziell unter Berücksichtigung der Problematik von versteckten Stationen, wird in diesem Stand der Technik jedoch nichts ausgesagt.

Aufgabe der vorliegenden Erfindung ist es somit, eine Möglichkeit bereit zu stellen, im Rahmen einer Reservierung von Funk-Übertragungskapazitäten für eine Datenübertragung von einer Sendeeinrichtung an mehrere Empfangseinrichtungen das Auftreten von versteckten Stationen möglichst weitgehend zu verhindern. Diese Aufgabe wird gelöst durch das Verfahren nach Anspruch 1 und das Funk-Kommunikationssystem nach Anspruch 13, eine spezielle Verwendung der Erfindung ist in Anspruch 12 angegeben.

Ein erster Gegenstand der Erfindung ist ein Verfahren zur Reservierung von Funk-Übertragungskapazitäten für eine Datenübertragung von einer Sendeeinrichtung an mehrere Empfangseinrichtungen, wobei die Datenübertragung zwischen der Sendeeinrichtung und den Empfangseinrichtungen zumindest teilweise über eine Funkverbindung erfolgt. Von der Sendeeinrichtung wird eine Reservierungs-Anfrage an mindestens eine Empfangseinrichtung übertragen, daraufhin wird eine Reservierungs-Antwort an die Sendeeinrichtung übertragen, und aufgrund der Reservierungs-Antwort erfolgt eine Reservierung von Übertragungskapazitäten. Gemäß der Erfindung ist nun vorgesehen, dass die Reservierungs-Anfrage gleichzeitig an mehrere Empfangseinrichtungen übertragen wird und die Empfangseinrichtungen für die Übertragung jeweils einer Reservierungs-Antwort im Rahmen der Funkverbindung auf gemeinsame Übertragungskapazitäten für eine gleichzeitige Übertragung der jeweiligen Reservierungs-Antwort zugreifen. Es erfolgt also ein gleichzeitiges Handshaking-Verfahren zwischen der Sendeeinrichtung und allen erreichbaren Empfangseinrichtungen statt dem Unicast-Handshaking, wie es aus dem Stand der Technik bekannt ist. Damit kann sichergestellt werden, dass möglichst alle erreichbaren Empfangseinrichtungen in die Handshaking-Prozedur eingebunden werden.

Entgegen herkömmlicher Verfahren nach dem Stand der Technik, wie z.B. des RTS/CTS-Verfahrens in IEEE 802.11, bei dem insbesondere, wie bereits erwähnt, nur einer Empfangseinrichtung ein RTS-Signal im Unicast-Verfahren zugesandt wird und auf ein RTS-Signal nur eine Empfangseinrichtung mit einem CTS-Signal antwortet, wobei jeder Empfangseinrichtung separat eine entsprechende Übertragungskapazität für die Übertragung ihres CTS-Signals zugewiesen würde, nutzen in dem vorgeschlagenen Verfahren alle Empfangseinrichtungen gleichzeitig dieselben Übertragungskapazitäten zur Übertragung der Reservierungs-Antwort. Durch diese erfindungsgemäße Bündelung der Reservierungs-Antwort auf dieselben Übertragungskapazitäten wird die für die Übertragung der Reservierungs-Antworten nötige Gesamt-Übertragungskapazität auf ein konstantes und minimales Maß reduziert, unabhängig von der Zahl der Empfangseinrichtungen, die eine Reservierungs-Antwort übertragen.

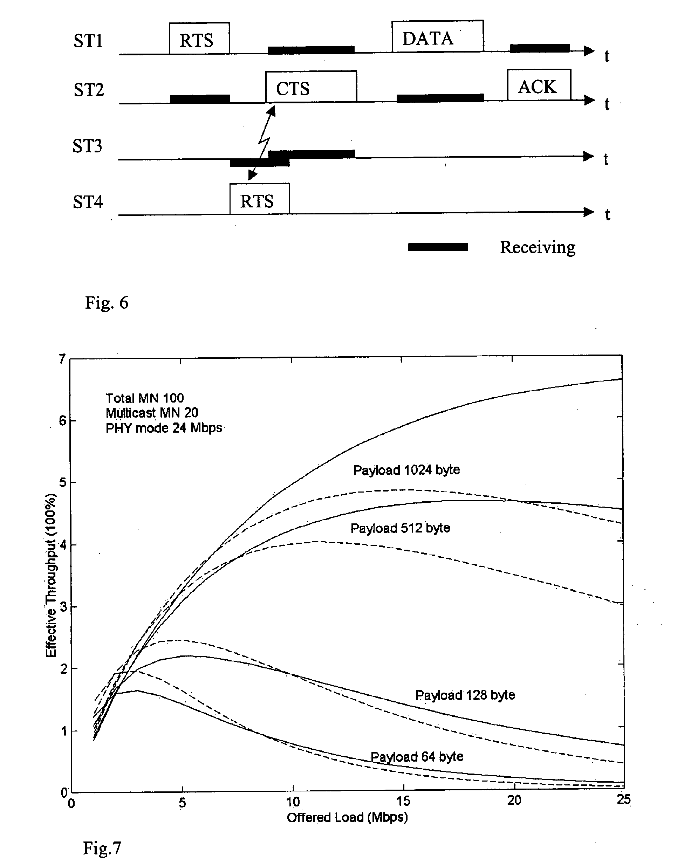

Durch die Übertragung der Reservierungs-Anfrage an mehrere Empfangseinrichtungen und die gleichzeitige Übertragung der Reservierungs-Antworten seitens der Empfangseinrichtungen wird die Ausbildung von versteckten Stationen verhindert, die im Stand der Technik z.B. dadurch entstehen können, dass eine Reservierungs-Antwort einer Empfangseinrichtung die Aussendung einer Reservierungs-Antwort einer oder mehrerer anderer Empfangseinrichtungen stark verzögern oder komplett verhindern kann. Dies soll später anhand der Figur 6 noch detailliert erläutert werden.

Weiterhin wird durch die Übertragung der Reservierungs-Anfrage an mehrere Empfangseinrichtungen und die gleichzeitige Aussendung der Reservierungs-Antworten einer größeren Zahl von Empfangseinrichtungen eine ausgedehnte Schutzzone um die Sendeeinrichtung bzw. die Empfangseinrichtungen aufgebaut, die eine eventuell störende Datenübertragung durch mögliche weitere Sendeeinrichtungen in verhindert und damit die Ausbildung von versteckten Stationen in Interferenzreichweite der vom Handshaking angesprochenen Empfangseinrichtungen möglichst unterbindet. Dies wird dadurch erreicht, dass aufgrund der Aussendung der Reservierungs-Anfrage an mehrere Empfangseinrichtungen (Multicast oder Broadcast) und der gleichzeitigen Aussendung der Reservierungs-Antworten aller Empfangseinrichtungen bereits möglichst viele Stationen in die Handshaking-Prozedur eingebunden werden. Außerdem empfangen alle weiteren potentiellen Sendeeinrichtungen in der Interferenzreichweite aller betreffenden Empfangseinrichtungen die Reservierungs-Antworten ebenfalls und erkennen daraus, dass eine andere Sendeeinrichtung gerade eine Datenübertragung vorbereitet.

Als Weiterbildung der Erfindung kann vorgesehen werden, dass im Rahmen der Reservierungs-Anfrage Informationen über den Umfang der zu reservierenden Funk-Übertragungskapazitäten an die Empfangseinrichtungen übertragen werden, insbesondere Informationen über die Datenmenge und/oder die zeitliche Dauer der vorgesehenen Datenübertragung, für die die Reservierung der Funk-Übertragungskapazitäten erfolgt. Damit erhalten die Empfangseinrichtungen bereits frühzeitig Kenntnis über den Umfang der vorgesehenen Datenübertragung. Es kann dabei weiterhin vorgesehen werden, dass im Rahmen der Reservierungs-Antworten die Informationen über den Umfang der zu reservierenden Funk-Übertragungskapazitäten durch die Empfangseinrichtungen an die Sendeeinrichtung bestätigt werden.

Weiterhin kann vorgesehen werden, dass im Rahmen der Reservierungs-Anfrage und/oder der Reservierungs-Antworten Informationen über den Beginn der Datenübertragung, welche mit Hilfe der zu reservierenden Funk-Übertragungskapazitäten erfolgen soll, übermittelt werden. Dies ist insbesondere für einen Einsatz der Erfindung im Rahmen einer Broadcast-Datenübertragung bzw. Multicast-Datenübertragung hilfreich, da damit zu einem praktisch frei wählbaren Zeitpunkt, nämlich ab dem Beginn der eigentlichen Datenübertragung, ein Schutz gegen versteckte Stationen aufgebaut werden kann.

Vorteilhaft ist es, wenn als Reservierungs-Antwort ein Datenpaket vorgesehen wird, das eine größere zeitlichen Dauer aufweist als die zeitliche Dauer der Reservierungs-Anfrage. Damit kann eine erste Sendeeinrichtung, die eine Reservierungs-Anfrage aussendet, mit größerer Sicherheit noch eine gleichzeitig empfangene Reservierungs-Antwort einer Empfangseinrichtung detektieren und daraus erkennen, dass diese Empfangseinrichtung bereits eine Datenübertragung einer anderen, zweiten Sendeeinrichtung erwartet. Daraufhin kann die erste Sendeeinrichtung ihren Übertragungswunsch zurückziehen, um mögliche Kollisionen mit der Datenübertragung der zweiten Sendeeinrichtung zu vermeiden.

Eine spezielle Möglichkeit für die gleichzeitige Nutzung gemeinsamer Übertragungskapazitäten ist, dass eine gleichzeitige Übertragung der Reservierungs-Antworten durch einen gleichzeitigen Zugriff der Endgeräte auf mindestens eine gemeinsame Übertragungseinheit der Funkverbindung zu der Sendeeinrichtung erfolgt. Beispiele für solche Übertragungseinheiten werden nachfolgend noch dargestellt. Es wird also nicht jedem Endgerät wie allgemein im Stand der Technik üblich, mindestens eine eigene Übertragungseinheit für eine Funkverbindung zur Sendeeinrichtung zur Verfügung gestellt, sondern die Endgeräte teilen sich mindestens eine gemeinsame Übertragungseinheit einer Funkverbindung. Hier kann es grundsätzlich zu Überdeckungen der einzelnen Übertragungen der Reservierungs-Antworten kommen, sofern nicht eine zusätzliche Trennung der einzelnen Reservierungs-Antworten, beispielsweise durch zusätzliche Codierungsverfahren, vorgesehen wird, wie im folgenden noch erläutert wird.

Als gleichzeitiger Zugriff auf mindestens eine gemeinsame Übertragungseinheit kann ein gleichzeitiger Zugriff beispielsweise auf mindestens eine gemeinsame Frequenz einer Frequenzmultiplex-Funkverbindung, mindestens einen gemeinsamen Zeitschlitz einer Zeitmultiplex-Verbindung oder mindestens einen gemeinsamen Code einer Codemultiplex-Verbindung erfolgen.

Soll jedoch eine komplette Überdeckung der übertragenen Reservierungs-Antworten vermieden werden, oder sollen noch weitere Informationen übertragen werden, so kann eine zusätzliche Codierung der im Rahmen der Übertragungseinheit übertragenen Reservierungs-Antworten und gegebenenfalls von zusätzlichen Informationen zur eindeutigen Identifizierung der Empfangseinrichtungen erfolgen. Seitens der Sendeeinrichtung erfolgt dann eine entsprechende Decodierung und Identifizierung der Empfangseinrichtungen, die eine Reservierungs-Antwort übertragen hatten.

Diese Codierung kann grundsätzlich durch geeignete Codes wie in einem Codemultiplex-Verfahren erfolgen, sie kann aber auch insbesondere durch eine Variation von physikalischen Eigenschaften, insbesondere von Energie, Frequenz oder Dauer der Trägersignale der Funkverbindung zu der Sendeeinrichtung während der Übertragungseinheit erfolgen. Eine spezielle Realisierung einer solchen Codierung kann im Rahmen von Mehrträgerverfahren wie OFDM erfolgen, die während einer Übertragungseinheit mehrere Träger, teilweise auch als Unterträger bezeichnet, zur Datenübertragung nutzen. Ein solches OFDM-Verfahren für Kommunikationssysteme ist beispielsweise in DE 44 41 323 A1 beschrieben. Hier kann jeder der Träger in einem gewissen Rahmen individuell beeinflusst werden und es kann dadurch eine zusätzliche Codierung erreicht werden. Somit wird vorgesehen, dass eine Codierung von mindestens einem Träger eines Mehrträgerverfahrens, beispielsweise durch Variation seiner Energie oder der Energien gewisser Träger relativ zueinander, erfolgt.

Alternativ zu einer Codierung der im Rahmen der Übertragungseinheit übertragenen Informationen kann auch vorgesehen werden, dass zum Empfang der Reservierungs-Antworten seitens der Sendeeinrichtung eine Kanalschätzung und eine Kanalentzerrung aufgrund bekannter Datenanteile der Reservierungs-Antworten erfolgt. Da bekannt ist, dass als Signal eine bekannte Reservierungs-Antwort empfangen werden soll, kann diese Reservierungs-Antwort gleichzeitig als Trainings-Sequenz für eine Kanalschätzung und Kanalentzerrung verwendet werden. Dies gilt sowohl, wenn alle Empfangseinrichtungen komplett identische Reservierungs-Antworten übertragen, als auch, wenn nur Teile der Reservierungs-Antworten bekannt sind, insbesondere derjenige Dateninhalt, der nicht zu einer möglichen Identifizierung der Empfangseinrichtung dient, sondern lediglich zur Übermittlung der Reservierungs-Informationen. Damit wird die Dekodierung der Reservierungs-Antworten erleichtert. Seitens der Sendeeinrichtung kann zur Kanalschätzung und Kanalentzerrung beispielsweise ein Rake-Empfänger verwendet werden. Damit kann auch ohne eine Codierung wie OFDM garantiert werden, dass die gleichzeitig ausgesandten Reservierungs-Antworten bei der Sendeeinrichtung korrekt empfangen und verarbeitet werden können.

Ein weiterer Gegenstand der vorliegenden Erfindung ist die Verwendung eines Verfahrens zur Reservierung von Funk-Übertragungskapazitäten wie es vorstehend beschrieben wurde, im Rahmen eines selbstorganisierenden Funk-Kommunikationssystems, also eines sogenannten Ad-Hoc-Netzes. Dies ist besonders vorteilhaft, da es gerade in Ad-Hoc-Netzen sehr leicht zu gegenseitigen negativen Beeinflussungen von Sendeeinrichtungen und Empfangseinrichtungen und zur Ausbildung von versteckte Stationen kommen kann.

Ein letzter Gegenstand der vorliegenden Erfindung ist ein Funk-Kommunikationssystem, insbesondere ein solches Funk-Kommunikationssystem, das zur Durchführung eines Verfahrens ausgebildet ist, wie es vorstehend beschrieben wurde, mit
- mindestens einer Sendeeinrichtung, aufweisend eine Einrichtung zur Übertragung von Reservierungs-Anfragen für eine Datenübertragung an mindestens eine Empfangseinrichtung,
- mehreren Empfangseinrichtungen, aufweisend eine Einrichtung zur Übertragung von Reservierungs-Antworten an Sendeeinrichtungen über eine Funkverbindung übertragen werden und
- Einrichtungen zur Reservierung von Übertragungskapazitäten. Gemäß der vorliegenden Erfindung ist vorgesehen, dass das Funk-Kommunikationssystem Einrichtungen zur gleichzeitigen Übertragung einer Reservierungs-Anfrage an mehrere Empfangseinrichtungen und Einrichtungen für einen Zugriff der Empfangseinrichtungen auf gemeinsamen Übertragungskapazitäten für eine gleichzeitige Übertragung von Reservierungs-Antworten aufweist.

Die Vorteile einer solchen Übertragung der Reservierungs-Anfrage an mehrere Empfangseinrichtungen und eines solchen Zugriffs der Empfangseinrichtungen auf gemeinsame Übertragungskapazitäten für eine gleichzeitige Übertragung von Reservierungs-Antworten wurde bereits anhand des oben dargestellten Verfahrens erläutert. Das erfindungsgemäße Funk-Kommunikationssystem kann zur Durchführung bestimmten oder aller oben dargestellter Verfahrensschritte entsprechend weiter angepasst werden.

Insbesondere kann vorgesehen werden, dass das Funk-Kommunikationssystem als selbstorganisierendes Funk-Kommunikationssystem, also als sogenanntes Ad-Hoc-Netz, ausgebildet ist und sowohl die Sendeeinrichtungen als auch die Empfangseinrichtungen als Endgeräte des Funk-Kommunikationssystems ausgebildet sind. Es sind also in diesem Fall keine speziellen Sendeeinrichtungen oder Empfangseinrichtungen vorgesehen, sondern alle Endgeräte sind prinzipiell gleichwertig und können je nach Erfordernis der aktuell anstehenden Datenübertragung als Sendeeinrichtungen wie auch als Empfangseinrichtungen agieren. Dies gilt insbesondere für sogenannte Multihop-Datenverbindungen, bei denen Daten über mehrere Endgeräte eines Ad-Hoc-Netzes weitergereicht werden.

Die Erfindung eignet sich also grundsätzlich für Funk-Kommunikationssysteme mit reservierenden Verfahren, wie z.B. GSM, HIPERLAN/2, UMTS, TETRA, DECT etc. Die vorgeschlagene Erfindung ist insbesondere auch ohne wesentliche Änderungen des Standards bei IEEE 802.11 einsetzbar.

Weiterhin eignet sich dieses Verfahren auch für andere Standards, wie z.B. HIPERLAN/1. Neben dem Einsatz des Verfahrens in IEEE 802.11 oder HIPERLAN/1 unter Verwendung des asynchronen Medienzugriffsverfahrens CSMA/CA (Carrier Sensing Multiple Access / Collision Avoidance) kann dieses Verfahren auch in Funk-Kommunikationssystemen eingesetzt werden, die ein synchrones Zugriffsverfahren verwenden wie TDMA (Time Division Multiple Access). Ein Beispiel hierfür ist das DECT-System (Digital European Cordless Telephone). Aber auch das HIPERLAN/2 System kann das Verfahren verwenden. Bei diesen Beispielen kann in der Reservierungs-Anfrage signalisiert werden, wann, also in welchem Zeitschlitz der Broadcast/Multicast übertragen wird. Damit kann wiederum das Funk-Kommunikationssystem zu einem frei gewählten Zeitpunkt für die Datenübertragung gegen versteckte Stationen geschützt werden.

Es sollen noch einige mögliche Anwendungsszenarien für die Erfindung genannt werden: Neben zukünftigen Multimedia-Anwendungen, die z.B. über typische Verteilnetze wie DAB (Digital Audio Broadcast, DVB, Digital Video Broadcast) ausgesandt werden, können auch andere Datenübertragungsdienste wie interaktive Spiele, Video-Konferenzen, Chat-Angebote und zahlreiche andere Anwendungen durch das vorgeschlagene Verfahren effizient eingerichtet werden. Daneben nutzen auch gewisse Protokolle von Funk-Kommunikationssystemen oftmals eine Broadcast/Multicast-Datenübertragung. So wird z.B. eine Broadcast-Datenübertragung in Routingprotokollen für Ad-hoc-Netze eingesetzt, um einen unbekannten Weg zu einer Zielstation zu finden (Route Discovery). Zukünftige Routing-Verfahren, bei denen der ungefähre aktuelle Aufenthaltsort des gesuchten Teilnehmers bekannt ist, sehen dafür eine Multicast-Datenübertragung vor. Damit wäre die Erfindung auch im Rahmen solcher Datenübertragungen bzw. im Rahmen der zuvor notwendigen Reservierung der entsprechenden Übertragungskapazitäten anwendbar.

Nachfolgend wird ein spezielles Ausführungsbeispiel der Erfindung anhand der Figuren 1 bis 8 erläutert.

Es zeigen
- Figur 1:: Schematische Darstellung eines erfindungsgemäßen Ad-Hoc Funk-Kommunikationssystems.
- Figur 2:: Schematische Darstellung des Aufbaus von Schutzzonen gegen versteckte Stationen durch die Erfindung.
- Figur 3:: Schematische Darstellung eines gemeinsam genutzten Zeitschlitzes in einem TDMA-Verfahren zur Übertragung von Reservierungs-Antworten durch die Endgeräte.
- Figur 4:: Darstellung der Übertragung von Reservierungs-Anfrage und Reservierungs-Antworten innerhalb einer Zeitschlitzrahmen-Struktur.
- Figur 5:: Schematische Darstellung des gemeinsamen Zugriffes von y Endgeräten auf ein gemeinsames OFDM-Symbol zur Übertragung von Reservierungs-Antworten
- Figur 6:: Schematische Darstellung der Ausbildung versteckter Stationen bei einem Unicast-Handshaking-Verfahrens nach dem Stand der Technik
- Figur 7:: Darstellung der Effizienzsteigerung durch die Erfindung für verschiedene Datenmengen
- Figur 8:: Darstellung der Effizienzsteigerung durch die Erfindung für unterschiedliche Zahlen von Empfangseinrichtungen

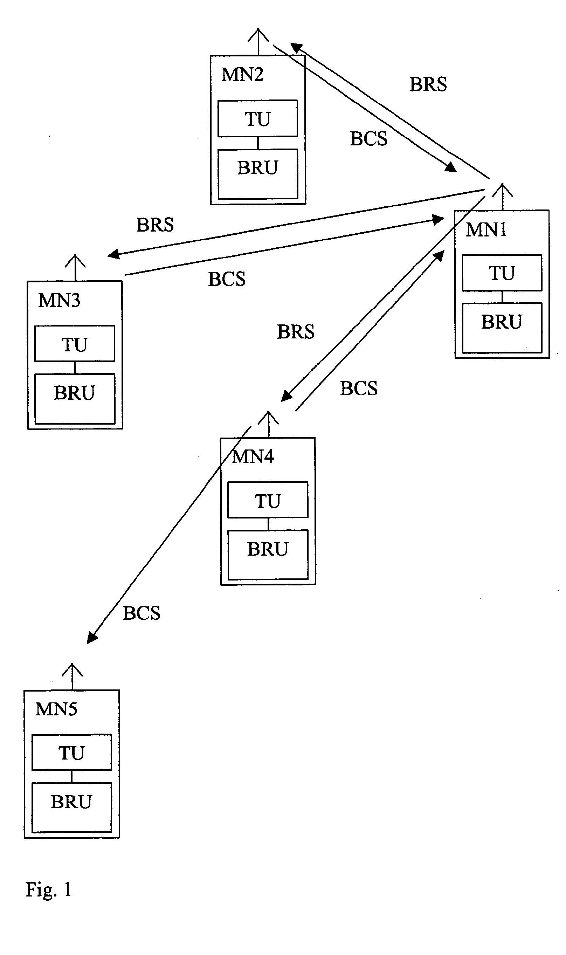

Fig. 1 zeigt als ein Anwendungsbeispiel für die vorliegende Erfindung ein selbstorganisierendes Funk-Kommunikationssystem, also ein Ad-Hoc Funk-Kommunikationssystem, kurz: Ad-Hoc-Netz. Ein Ad-Hoc-Netz ist ein Funk-Kommunikationssystem, bei dem alle Sende-/Empfangseinrichtungen des Netzes als Netzknoten zur Weiterleitung von zu übertragenden Informationen herangezogen werden können. Jede Sende-/Empfangseinrichtung kann somit auch als Vermittlungseinrichtung agieren. Solche Netze können sich idealerweise durch geeignete Auslegung der Sende-/Empfangseinrichtungen selbst organisieren. Die zur Weiterleitung dienenden Sende-/Empfangseinrichtungen können entweder durch mobile Stationen gebildet werden oder auch stationär installiert sein. Auf diese Weise können Daten auch über mehrere Netzknoten (Multi-Hop) weitergeleiten werden.

In Fig. 1 sind beispielhaft mehrere mobile Endgeräte (Mobile Nodes MN) MN1 bis MN5 dargestellt, die sowohl als Sendeeinrichtung als auch als Empfangseinrichtung agieren können, je nachdem, zu welchem Endgerät eine Datenübertragung vorgesehen ist. Die Endgeräte MN weisen dazu entsprechend ausgebildete Übertragungseinrichtungen (Transmission Units TU) auf. Im Rahmen der Erfindung ist vorgesehen, dass die TUs insbesondere zur gleichzeitigen Übertragung von Reservierungs-Anfragen an mehrere Endgeräte (Multicast oder Broadcast) ausgebildet sind. Im Fall der Fig. 1 sendet nun das Endgerät MTN1 im Broadcast-Verfahren eine Reservierungs-Anfrage BRS (Broadcast Request Signal) aus. Diese Reservierungs-Anfrage BRS wird durch eine entsprechende Einrichtung zur Reservierung von Übertragungskapazitäten gesteuert, die in Fig. 1 zur Veranschaulichung schematisch als separate Einrichtung (Broadcast Reservation Unit BRU) dargestellt ist. Entsprechende Einrichtungen BRU sind auch in den anderen Endgeräten MN vorhanden. Diese Einrichtung BRU kann tatsächlich als separate Einrichtung in den Endgeräten MN ausgebildet sein oder auch funktionell durch eine entsprechende Anpassung bereit in den Endgeräten MN vorhandener Komponenten realisiert werden.

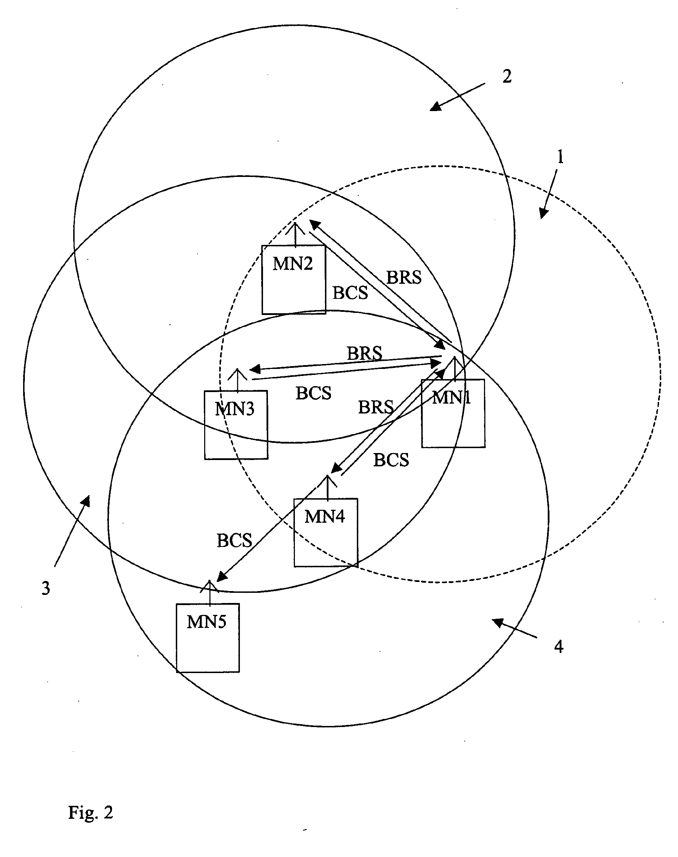

Das Endgerät MN1 signalisiert mit dem BRS, dass eine Übertragung von Daten vorgesehen ist und dass eine entsprechende Reservierung von Übertragungskapazitäten erfolgen soll. Das Endgerät MN1 wird also für die vorgesehene Datenübertragung als Sendeeinrichtung agieren. In dem BRS können auch Informationen enthalten sein, wieviele Daten übertragen werden sollen oder wie lange die Datenübertragung dauern soll. Diese Reservierungs-Anfrage BRS wird von allen Endgeräten MN2, MN3, MN4 empfangen, die sich innerhalb der Detektionsreichweite des Endgerätes MN1 befinden. Dies wird im Detail noch anhand der Fig. 2 erläutert. Die Endgeräte MN2, MN3, MN4 werden also für die vorgesehene Datenübertragung als Empfangsgeräte agieren.

Die Endgeräte MN2, MN3, MN4 senden nach erhalt des BRS gleichzeitig eine Reservierungs-Antwort BCS (Broadcast Clear Signal) an das Endgerät MN1 zurück, wobei die Endgeräte MN2, MN3, MN4 zur Übertragung des BCS in dem Ad-Hoc-Netz auf gemeinsame Übertragungskapazitäten zugreifen. Diese Reservierungs-Antwort BCS wird von dem ersten Endgerät MN1, aber auch von weiteren Endgeräten MN5 empfangen, die sich in Reichweite der Endgeräte MN2, MN3, MN4 befinden.

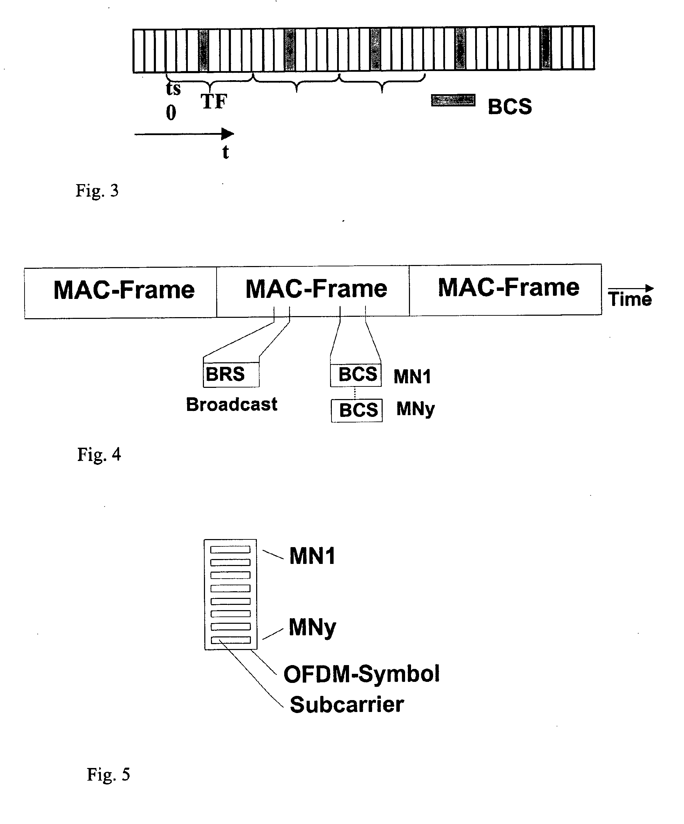

Die Übertragungseinrichtungen TU der Endgeräte MN sind also überdies so ausgebildet, dass ein gleichzeitiger Zugriff durch die Endgeräte MN auf gemeinsame Übertragungskapazitäten erfolgen kann. Als gemeinsame Übertragungskapazität kann beispielsweise bei Verwendung eines TDMA-Übertragungsverfahrens eine Übertragungseinheit in Form eines gemeinsamen Zeitschlitzes für die Endgeräte MN zur Verfügung gestellt werden. Auf diesen Zeitschlitz können dann die Endgeräte MN zur Übertragung des BCS zugreifen, wobei der Zugriff gleichzeitig durch alle Endgeräte MN2, MN3, MN4 erfolgt, die das BRS empfangen haben. Ein solcher Zeitschlitz ts für die Übertragung von Reservierungs-Antworten BCS innerhalb eines TDMA-Zeitschlitzrahmens TF ist schematisch in Figur 3 dargestellt. Analog kann aber beispielsweise auch ein gemeinsamer Code eines CDMA-Verfahrens oder eine gemeinsame Frequenz eines FDMA-Verfahrens als gemeinsame Übertragungseinheit genutzt werden.

Fig. 4 zeigt detaillierter die gleichzeitige Übertragung von mehreren Reservierungs-Antworten BCS mehrerer Endgeräte MN1 bis MNy in einer Übertragungseinheit eines MAC-Rahmens (MAC-Frame), welche als Antwort auf eine - im Broadcast ausgesendete - Reservierungs-Anfrage BRS gesendet wurden.

Speziell kann das vorliegende Verfahren in Mehrträgersystemen wie Systemen nach dem OFDM-Verfahren verwendet werden. Dort ist eine gleichzeitige Übertragung von Reservierungs-Antworten BCS problemlos, was insbesondere durch das bei OFDM vorgesehene Schutzintervall garantiert wird, welches Mehrwege-Ausbreitungen kompensiert. Eventuelle Umweglaufzeiten können so bei OFDM durch das Schutzintervall ausgeglichen werden. Dieses Prinzip wird z.B. beim Gleichwellenfunk ausgenutzt. In Figur 5 ist eine solche gleichzeitige Übertragung von mehreren Quittungen innerhalb eines OFDM-Symbols schematisch dargestellt, wobei jeweils ein Endgerät MN1 bis MNy auf jeweils einen Unterträger (Subcarrier) des OFDM-Symbols zugreift.

Alternativ kann aber auch die Einführung eines "Timing Advance"-Mechanismus vorgesehen werden, der garantiert, dass die seitens der Endgeräte MN2, MN3, MN4 ausgesandten Reservierungs-Antworten BCS gleichzeitig bei dem Endgerät MN1 ankommen. Timing-Advance-Mechanismen bewirken dann eine entfernungsabhängige Aussendung der Reservierungs-Antworten, die die unterschiedlichen Laufzeiten der BCS-Signale kompensiert: je größer die Distanz zwischen Endgerät MN2, MN3, MN4 und Endgerät MN1, desto früher erfolgt die Aussendung des entsprechenden BCS-Signals, damit alle BCS-Signale der Endgeräte MN2, MN3, MN4 bei dem Endgerät MN1 gleichzeitig ankommen. Der geeignete Timing Advance kann z.B. über die Empfangsfeidstärke der Reservierungs-Anfrage BRS bei den Endgeräten MN2, MN3, MN4, oder über geeignete Positionsinformationen oder über einen vorherigen Austausch von Timing-Advance-Informationen oder ähnliche Verfahren ermittelt werden. Speziell für ein Zeitmultiplex-Verfahren bedeutet dies, dass sich die Endgeräte MN2, MN3, MN4 auf einen gemeinsamen Empfangs-Zeitschlitz ts bei dem Endgerät MN1 synchronisieren. Ein solcher Timing-Advance-Mechanismus wurde in Ad-Hoc-Netzen bislang nicht als sinnvoll angesehen.

Durch die Bündelung der Reservierungs-Antworten auf ein und dieselbe Übertragungseinheit, insbesondere auf denselben Zeitschlitz ts wird der Daten-Overhead, also der durch die Realisierung des Reservierungs-Verfahrens nötige Signalisierungsaufwand, fest auf einen Zeitschlitz begrenzt, unabhängig von der Anzahl der beteiligten Endgeräte MN.

Fig. 2 zeigt einen weiteren Vorteil der vorliegenden Erfindung: Durch die gleichzeitige Übertragung der Reservierungsanfrage an mehrere Endgeräte MN2, MN3, MN4 und die gleichzeitige Aussendung der Reservierungs-Antwort BCS durch die Endgeräte MN2, MN3, MN4 wird eine Schutzzone 1, 2, 3, 4 um das Endgerät MN1 aufgebaut. Das Endgerät MN1 erreicht mit dem BRS praktisch gleichzeitig alle Endgeräte MN2, MN3, MN4 innerhalb eines Gebietes 1, das durch die Reichweite des Endgerätes MN1 definiert wird, um mit diesen Endgeräten MN2, MN3, MN4 gleichzeitig ein Handshaking durchzuführen. All diese Endgeräte MN2, MN3, MN4 senden gleichzeitig ein BCS, das auch von allen Endgeräten MN5 in einem Gebiet 2, 3, 4 empfangen wird, welches durch die jeweilige Reichweite der Endgeräte MN2, MN3, MN4 definiert wird. Alle weiteren Endgeräte MN5 wissen damit, dass ein Endgerät MN1 mit einer Datenübertragung beginnen wird und werden eigene Datenübertragungen zurückhalten, um mögliche störende Interferenzen zu vermeiden. Es wird somit de facto also eine Schutzzone 1, 2, 3, 4 zur Vermeidung versteckter Stationen aufgebaut.

Fig. 6 zeigt dagegen ein Beispiel für bisher aus dem Stand der Technik bekannte Verfahren, bei dem es zur Bildung von versteckten Stationen kommt. Es werden dabei vier Stationen ST1 bis ST4 betrachtet. Das Verfahren basiert auf einer Unicast-Handshaking-Prozedur, die vor der eigentlichen Datenübertragung erfolgt, also dem Austausch einer Reservierungs-Anfrage und einer Reservierungs-Antwort zwischen nur einer Sendeeinrichtung und nur einer Empfangseinrichtung. Der Empfang (Receiving) einer Meldung ist in Fig. 6 durch dicke Balken bei der jeweils empfangenden Station dargestellt. Eine Station ST1 zeigt mit einer Meldung Ready To Send RTS an, dass eine Datenübertragung vorgesehen ist. Eine Empfangsstation ST2 antwortet mit einer Meldung Clear To Send CTS. Es empfängt jedoch nicht nur die Station ST1 die CTS-Meldung, sondern auch die Station ST3. Wenn nun die Station ST3, wie in Fig. 6 dargestellt, etwa gleichzeitig eine RTS-Meldung einer weiteren Station ST4 empfängt, die eigentlich ein Handshaking zwischen ST3 und ST4 bewirken sollte, dann kommt es zu einer Interferenz dieser Meldungen bei ST3. Folglich wird bei ST3 der Empfang der RTS-Nachricht von ST4 gestört und ST3 kann keine CTS-Meldung an ST4 zurücksenden. Dagegen empfängt ST1 die CTS-Meldung von ST2 ungestört, überträgt die Daten (DATA) an ST2, deren Empfang ST2 bestätigt (Acknowledgement ACK).

ST2 ist also eine versteckte Station für die Übertragung von ST4 nach ST3 (ebenso ist ST3 eine versteckte Station für die Übertragung von ST1 nach ST2). Es kann dabei kein Handshaking mit der Station ST3 erfolgen. Eine Reservierung von Übertragungskapazitäten für eine vorgesehene Datenübertragung zu dieser Station kann also nicht erfolgen. Dies stellt eine unerwünschte Beeinträchtigung des Datenaustausches zwischen den Stationen dar. Dagegen kann, wie bereits gezeigt, bei der Erfindung durch die Kombination von a) einer Multicast- oder Broadcast-Übertragung der Reservierungs-Anfrage mit b) einer gleichzeitigen Übertragung der Reservierungs-Antworten garantiert werden, dass ein Handshaking mit allen erreichbaren Stationen erfolgt.

Für die sichere Datenübertragung auf Multicast- und Broadcast-Verbindungen in einem Funknetz wird also ein Handshaking-Verfahren vorgeschlagen, bei dem auf eine Reservierungs-Anfrage BRS von allen adressierten Stationen die gleiche Reservierungs-Antwort BCS zur selben Zeit übertragen wird. In dem BRS und BCS kann die Zeit, wie lange die darauffolgende eigentliche Datenübertragung dauert, enthalten sein, wie bereits erwähnt wurde. Zudem wird vorgeschlagen, dass das BCS länger als das BRS andauert, so dass bei gleichzeitiger Aussendung eines BRS und Empfang eines BCS von dem Sender des BRS das BCS trotzdem noch erkannt wird. Der Sender, der das BRS ausgesendet hat, kann dadurch nach der Übertragung das BRS das BCS detektieren und seinen Übertragungswunsch zurückziehen, um Kollisionen zu verhindern.

Weiterhin wird vorgeschlagen, dass in dem BCS die Information enthalten ist, wann die Datenübertragung beginnt. Damit kann die hier beschriebene Handshaking-Prozedur zur Reservierung einer Broadcast/Multicast-Übertragung eingesetzt werden.

Durch das vorgeschlagene Verfahren können Multicast-/Broadcast-Dienste mit einer hohen Wahrscheinlichkeit vor versteckten Station geschützt werden. Der Durchsatz bei Broadcast/Multicast kann bei Anwesenheit von versteckten Stationen dadurch wesentlich vergrößert werden. Durch die Übertragung der BRS und BCS werden Schutzzonen um den Sender und die Empfänger aufgebaut, so dass alle Stationen in der Reichweite von Sender und Empfängern von der Broadcast/Multicast-Übertragung informiert sind.
Das vorgeschlagene Verfahren ist ohne wesentliche Änderungen des Standards bei IEEE 802.11 einsetzbar. Weiterhin eignet sich dieses Verfahren auch für andere Standards, wie z.B. HIPERLAN/2. Generell kann das vorgeschlagene Verfahren, wie bereits erläutert, für Ad-hoc-Netze eingesetzt werden, um die Problematik der versteckten Stationen bei Verteildiensten zu bekämpfen.

Wird das vorgeschlagene Verfahren im Standard IEEE 802.11a integriert, so müssen nahezu keine Änderungen durchgeführt werden. Das Verfahren kann prinzipiell auf den gleichen Algorithmen aufbauen, die bislang für eine Unicast-Verbindung genutzt werden. Zusätzlich muss jedoch als Empfängeradresse von allen Empfängern, die mit einem BCS antworten, die Broadcast- bzw. Multicast-Adresse eingesetzt werden. Um das Verfahren in den IEEE 802.11 Standard zu integrieren, muss also ein BRS-Signale erzeugt werden, das auf einem RTS-Signal basiert, bei dem das Adressfeld (Receiver Address, RA) der Multicast-Gruppe bzw. dem Broadcast entspricht. Als Antwort fügt bevorzugt das als Empfangseinrichtung agierende Endgerät MN die gleiche Multicast/Broadcast-Adresse in das BCS-Signal ein, das auf einem CTS-Paket basiert, bei dem die Multicast/Broadcast-Adresse anstatt der MAC-Adresse des als Empfangseinrichtung agierenden Endgerätes MN eingefügt wird. Damit sind alle BCS-Pakete aller als Empfangseinrichtung agierenden Endgeräte MN2, MN3, MN4 identisch. Die standardkonformen RTS/CTS-Pakete entsprechen im übrigen den BRS/BCS des vorgeschlagenen Verfahrens.

Erfolgt insbesondere die hier vorgeschlagene neue Form der Anwendung des OFDM-Verfahrens, welches im IEEE 802.11a eingesetzt wird, können die von den Empfangseinrichtungen zurückgesandten BCS-Signale mit hoher Wahrscheinlichkeit in einer Sendeeinrichtung fehlerfrei decodiert werden. Da gleichzeitig mehrere Endgeräte MN2, MN3, MN4 das gleiche BCS-Signal aussenden, kann dieses Signal aufgrund der gegenseitigen Signalverstärkung bei dem empfangenden Endgerät MN1 sogar besser empfangen werden als beim Stand der Technik, bei dem nur eine Station mit einem CTS-Signal antwortet. Da zudem die gesamte Sendeleistung aller Stationen größer ist als bei der Aussendung durch eine Station, kann die Sendeleistung pro Endgerät MN für das BCS-Paket reduziert werden. Trotzdem wird das Signal sicher innerhalb der Decodierreichweite für ein einzelnes Signal empfangen, da sich die Signalleistung aller BCS-Pakete aufsummiert.

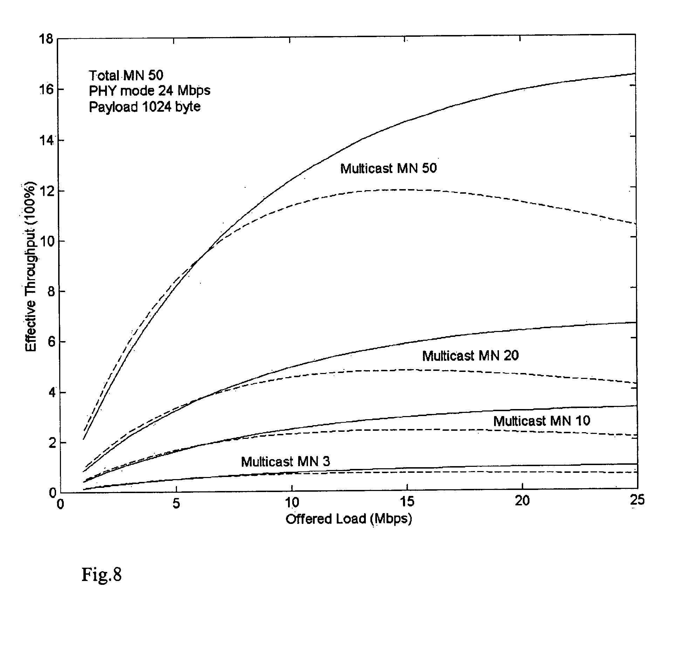

Aufgrund des Schutzes der Empfänger eines Broadcast / Multicast vor versteckten Stationen kann letztlich der Durchsatz an Daten innerhalb des Funk-Kommunikationssystems gegenüber den im Stand der Technik beschriebenen Verfahren deutlich vergrößert werden. Dies soll anhand der Figuren 7 und 8 veranschaulicht werden.

In Fig. 7 wird der Durchsatz an Daten in einem Ad-Hoc-Netz als Funktion der Paketgröße (64 Byte bis 1024 Byte) mit erfindungsgemäßem Handshaking-Verfahren (durchgezogene Kurven) und ohne erfindungsgemäßem Handshaking-Verfahren (gestrichelte Kurven) verglichen. Durch das vorgeschlagene Verfahren kann z.B. der Durchsatz an Daten im Extremfall fast um die Hälfte von 450% auf 650% Prozent für ein Datenangebot von 20Mbps erhöht werden. Ein Durchsatz an Daten von über 100% kann dadurch erreicht werden, dass mehrere Endgeräte MN gleichzeitig ein Datenpaket empfangen, wobei jeder komplette Empfang aller Daten pro Endgerät mit 100 % gezählt wird. Empfangen z.B. jedes Mal 2 Endgeräte alle Pakete, dann resultiert daraus ein Durchsatz von 200%. Fig. 7 zeigt die Resultate für eine Gesamtzahl von 100 Endgeräten MN in dem Ad-Hoc-Netz für den Fall einer Multicast-Verbindung zu 20 Endgeräten MN. Physikalisch (PHY Mode) stehen 24 Mbps zur Verfügung. Aus der Figur ist zudem zu entnehmen, dass mit der Zunahme der Länge der Pakete der positive Effekt, der durch die Erfindung erzielt wird, zunimmt. Dieses Phänomen ist ebenfalls für Unicast-Übertragungen bekannt. Es kann daher bevorzugt vorgesehen werden, dass für einen Einsatz der Erfindung im Rahmen des Standards IEEE 802.11 vorgeschlagen, erst ab einer gewissen Paketgröße, hier insbesondere ab 512 Byte, das erfindungsgemäße Handshaking-Verfahren zu verwenden.

In Fig. 8 ist der Einfluss der Zahl der als Empfangseinrichtungen adressierten Endgeräte MN einer Multicast-Gruppe (3 bis 50 empfangende Endgeräte MN) auf den Durchsatz an Daten dargestellt. Je größer die Anzahl der empfangenden Endgeräte MN ist, desto größer ist der positive Effekt, also der Gewinn, des vorgeschlagenen Verfahrens.

## Patentansprüche

1. Verfahren zur Reservierung von Funk-Übertragungskapazitäten für eine Datenübertragung von einer Sendeeinrichtung (MN1) an mehrere Empfangseinrichtungen (MN2, MN3, MN4), wobei die Datenübertragung zwischen der Sendeeinrichtung (MN1) und den Empfangseinrichtungen (MN2, MN3, MN4) zumindest teilweise über eine Funkverbindung erfolgt, wobei von der Sendeeinrichtung (MN1) eine Reservierungs-Anfrage (BRS) an mindestens eine Empfangseinrichtung (MN2, MN3, MN4) übertragen wird, daraufhin eine Reservierungs-Antwort (BCS) an die Sendeeinrichtung (MN1) übertragen wird, und aufgrund der Reservierungs-Antwort (BCS) eine Reservierung von Übertragungskapazitäten erfolgt,
**dadurch gekennzeichnet,**
**dass** die Reservierungs-Anfrage (BRS) gleichzeitig an mehrere Empfangseinrichtungen (MN2, MN3, MN4) übertragen wird und die Empfangseinrichtungen (MN2, MN3, MN4) für die Übertragung jeweils einer Reservierungs-Antwort (BCS) im Rahmen der Funkverbindung auf gemeinsame Übertragungskapazitäten für eine gleichzeitige Übertragung der jeweiligen Reservierungs-Antwort (BCS) zugreifen.

2. Verfahren nach Anspruch 1,
**dadurch gekennzeichnet,**
**dass** im Rahmen der Reservierungs-Anfrage (BRS) Informationen über den Umfang der zu reservierenden Funk-Übertragungskapazitäten an die Empfangseinrichtungen (MN2, MN3, MN4) übertragen werden.

3. Verfahren nach Anspruch 2,
**dadurch gekennzeichnet,**
**dass** im Rahmen der Reservierungs-Antworten (BCS) die Informationen über den Umfang der zu reservierenden Funk-Übertragungskapazitäten durch die Empfangseinrichtungen (MN2, MN3, MN4) an die Sendeeinrichtung (MN1) bestätigt werden.

4. Verfahren nach einem der Ansprüche 1 bis 3,
**dadurch gekennzeichnet,**
**dass** im Rahmen der Reservierungs-Anfrage (BRS) und/oder der Reservierungs-Antworten (BCS) Informationen über den Beginn der Datenübertragung, welche mit Hilfe der zu reservierenden Funk-Übertragungskapazitäten erfolgen soll, übermittelt werden.

5. Verfahren nach einem der Ansprüche 1 bis 4,
**dadurch gekennzeichnet,**
**dass** als Reservierungs-Antwort (BCS) ein Datenpaket vorgesehen wird, das eine größere zeitlichen Dauer aufweist als die zeitliche Dauer der Reservierungs-Anfrage (BRS).

6. Verfahren nach einem der Ansprüche 1 bis 5,
**dadurch gekennzeichnet,**
**dass** eine gleichzeitige Übertragung der Reservierungs-Antworten (BCS) durch einen gleichzeitigen Zugriff der Empfangseinrichtungen auf mindestens eine gemeinsame Übertragungseinheit (ts) der Funkverbindung zu der Sendeeinrichtung (MN1) erfolgt.

7. Verfahren nach Anspruch 6,
**dadurch gekennzeichnet,**
**dass** ein gleichzeitiger Zugriff auf mindestens eine gemeinsame Frequenz einer Frequenzmultiplex-Funkverbindung, mindestens einen gemeinsamen Zeitschlitz (ts) einer Zeitmultiplex-Verbindung oder mindestens einen gemeinsamen Code einer Codemultiplex-Verbindung erfolgt.

8. Verfahren nach einem der Ansprüche 6 oder 7,
**dadurch gekennzeichnet,**
**dass** eine Codierung der im Rahmen der Übertragungseinheit (ts) übertragenen Reservierungs-Antworten (BCS) zur eindeutigen Identifizierung der Empfangseinrichtungen (MN2, MN3, MN4) erfolgt und seitens der Sendeeinrichtung (MN1) eine entsprechende Dekodierung und Identifizierung der Empfangseinrichtungen (MN2, MN3, MN4) erfolgt.

9. Verfahren nach Anspruch 8,
**dadurch gekennzeichnet,**
**dass** die Codierung durch eine Variation von physikalischen Eigenschaften, insbesondere von Energie, Frequenz oder Dauer der Trägersignale der Funkverbindung zu der Sendeeinrichtung (MN1) während der Übertragungseinheit (ts) erfolgt.

10. Verfahren nach einem der Ansprüche 8 oder 9,
**dadurch gekennzeichnet,**
**dass** eine Codierung von mindestens einem Träger eines Mehrträgerverfahrens erfolgt.

11. Verfahren nach einem der Ansprüche 6 oder 7,
**dadurch gekennzeichnet,**
**dass** zum Empfang der Reservierungs-Antworten (BCS) seitens der Sendeeinrichtung (MN1) eine Kanalschätzung und eine Kanalentzerrung aufgrund bekannter Datenanteile der Reservierungs-Antworten (BCS) erfolgt.

12. Verwendung eines Verfahrens zur Reservierung von Funk-Übertragungskapazitäten nach einem der Ansprüche 1 bis 11 im Rahmen eines selbstorganisierenden Funk-Kommunikationssystems.

13. Funk-Kommunikationssystem, insbesondere zur Durchführung eines Verfahrens nach einem der Ansprüche 1 bis 11, mit
- mindestens einer Sendeeinrichtung (MN1), aufweisend eine Einrichtung (TU) zur Übertragung von Reservierungs-Anfragen (BRS) für eine Datenübertragung an mindestens eine Empfangseinrichtung (MN2, MN3, MN4),
- mehreren Empfangseinrichtungen (MN2, MN3, MN4), aufweisend eine Einrichtung (TU) zur Übertragung von Reservierungs-Antworten (BCS) an Sendeeinrichtungen (MN1) über eine Funkverbindung und
- Einrichtungen (BRU) zur Reservierung von Übertragungskapazitäten,
**dadurch gekennzeichnet,**
**dass** das Funk-Kommunikationssystem Einrichtungen (TU) zur gleichzeitigen Übertragung einer Reservierungs-Anfrage (BRS) an mehrere Empfangseinrichtungen (MN2, MN3, MN4) und Einrichtungen (TU) für einen Zugriff der Empfangseinrichtungen (MN2, MN3, MN4) auf gemeinsamen Übertragungskapazitäten für eine gleichzeitige Übertragung von Reservierungs-Antworten (BCS) aufweist.

14. Funk-Kommunikationssystem nach Anspruch 13,
**dadurch gekennzeichnet,**
**dass** das Funk-Kommunikationssystem als selbstorganisierendes Funk-Kommunikationssystem ausgebildet ist und sowohl die Sendeeinrichtungen (MN1) als auch die Empfangseinrichtungen (MN2, MN3, MN4) als Endgeräte des Funk-Kommunikationssystems ausgebildet sind.
